# EUROPÄISCHE PATENTSCHRIFT

(11) **EP 2 011 373 B1**
(45) Veröffentlichungstag und Bekanntmachung des Hinweises auf die Patenterteilung: **23.10.2013**
(21) Anmeldenummer: 07723822.8
(22) Anmeldetag: 30.03.2007
(51) Int. Cl.: H05B 41/04

(54) **ÜBERLAGERUNGSZÜNDSCHALTUNG FÜR HOCHDRUCK-ENTLADUNGSLAMPEN**
SUPERIMPOSED-TYPE IGNITION DEVICE FOR HIGH-PRESSURE DISCHARGE LAMPS
APPAREIL D'ALLUMAGE À SUPERPOSITION POUR LAMPES À DÉCHARGE HAUTE PRESSION

(30) Priorität: 21.04.2006 DE 102006018568; 25.07.2006 DE 102006034372
(43) Veröffentlichungstag der Anmeldung: 07.01.2009
(73) Patentinhaber: Tridonic GmbH & Co KG, 6851 Dornbirn (AT)
(72) Erfinder: ARBINGER, Kai, 6971 Hard (AT); PLONER, Roman, 6845 Hohenems (AT)
(74) Vertreter: Rupp, Christian
(86) Internationale Anmeldenummer: PCT/EP2007/002880
(87) Internationale Veröffentlichungsnummer: WO 2007/121824

(56) Entgegenhaltungen:
- EP-A- 0 613 326
- WO-A-2005/006820
- DE-A1- 19 531 622
- DE-A1- 19 531 623
- DE-U1-202005 013 895
- US-A- 4 291 254
- US-A1- 2003 020 418
- US-B1- 6 181 084

## Beschreibung

Die vorliegende Erfindung bezieht sich auf ein Überlagerungszündgerät zum Zünden von Hochdruck-Entladungslampen.

Zum Zünden von Hochdruck-Entladungslampen sind verschiedene Zündschaltungen und Verfahren aus dem Stand der Technik bekannt. Beispielsweise ist in DE 195 31 623 A1 eine Schaltungsanordnung offenbart, die über eine Abschaltautomatik ("Timer-Schaltung") verfügt, welche neben einer Zünderkennungsvorrichtung, die ein erfolgreiches Zünden der Hochdruck-Gasentladungslampe erfasst, zwei Zählvorrichtungen zur Erfassung der Anzahl an erfolgten Lampenzündungen bzw. einer bereits abgelaufenen Zündbetriebsdauer aufweist. Mit dem Abschalten der Zündschaltung wird die Abschaltautomatik in einen definierten Ausgangszustand zurückgesetzt.

EP 08 47 681 Bl bezieht sich auf eine Zündschaltung für eine wechselstrombetriebene Hochdruck-Gasentladungslampe, welche einen steuerbaren Schalter aufweist, der in Serie zu einer Parallelschaltung aus einem Stoßkondensator einerseits und einer Serienschaltung aus der Primärwicklung eines Impulstransformators und einem Halbleiter-Leistungsschalter andererseits geschaltet ist.

In DE 20 2005 013 895 U1 ist ein Überlagerungszündgerät für eine Hochdruck-Entladungslampe beschrieben, bei der in eine Wechselspannung führende Versorgungsleitung zwischen der Lampe und einem aus einer Drosselspule gebildeten magnetischen Vorschaltgerät die Sekundärwicklung eines Impulstransformators geschaltet ist und die Serienschaltung aus der Lampe und der Sekundärwicklung des Impulstransformators durch eine als Hochfrequenz-Rückschlusskondensator wirkende Serienschaltung aus einem Stoßkondensator und einem Zündhilfskondensator überbrückt ist.

DE 195 31 622 A1 offenbart eine Zündschaltung für eine Hochdruck-Gasentladungslampe.

### AUFGABE DER VORLIEGENDEN ERFINDUNG

Ausgehend von dem vorstehend genannten Stand der Technik, ist die vorliegende Erfindung der Aufgabe gewidmet, ein Überlagerungszündgerät mit Abschaltautomatik bereitzustellen, bei dem die Wärmeabfuhr des Nebenschlusswiderstands verbessert wird.

Diese Aufgabe wird erfindungsgemäß durch die Merkmale der unabhängigen Patentansprüche gelöst. Ausführungsbeispiele, die den der Erfindung zugrunde liegende Grundgedanken in vorteilhafter Weise weiterbilden, sind in den abhängigen Patentansprüchen definiert.

### ZUSAMMENFASSENDE DARSTELLUNG DER VORLIEGENDEN ERFINDUNG

Die im vorhergehenden Abschnitt definierte Aufgabe wird durch ein zur Steuerung des Zündbetriebs einer Gasentladungslampe vorgesehenes Überlagerungszündgerät gemäß Anspruch 1 gelöst.

Das Überlagerungszündgerät verfügt dabei über einen Impulstransformator, der Zündimpulse von einem primärseitigen Zündkreis in einen mit den Elektroden der Hochdruck-Entladungslampe verbundenen sekundärseitigen Lastkreis transformiert. Der Zündkreis umfasst einen in einen Resonanzkreis geschalteten Schalter, der durch ein Umschalten in einen niederohmigen Zustand dafür sorgt, dass von dem Resonanzkreis generierte Spannungsspitzen über den Impulstransformator als Zündimpulse in den Lastkreis transformiert werden.

Die Steuerungsschaltung deaktiviert den Zündbetrieb durch Parallelschalten eines Ohmschen Widerstands (Nebenschlusswiderstand), wodurch zu dem Resonanzkreis ein Nebenschluss-Strompfad geschaltet wird. Der Nebenschlusswiderstand ist dabei bspw. derart ausgelegt, dass die Resonanzkapazität sich nicht mehr auf eine Spannung aufladen kann, welche den Halbleiter-Leistungsschalter zum Umschalten in einen niederohmigen Zustand veranlasst.

Erfindungsgemäß ist wenigstens ein Teil des Nebenschlusswiderstands auf der Wechselstrom führenden Eingangsseite des Gleichrichters angeordnet. Ggf. ist ein weiterer Teil des Nebenschlusswiderstands auf der Gleichstrom führenden Ausgangsseite dieses Gleichrichters.

Um den Nebenschlusswiderstand zu der wenigstens einen Resonanzkapazität und/oder der wenigstens einen Resonanzinduktivität des Resonanzkreises parallel zu schalten, steuert die elektronische Steuerungsschaltung einen Leistungsschalter an.

Weiterhin verfügt die elektronische Steuerungsschaltung erfindungsgemäß über eine integrierte Zünderkennungsschaltung, mit deren Hilfe sie ein auf einen erfolgreichen Zündvorgang zurückzuführendes Brennen der an das Betriebsgerät angeschlossenen Hochdruck-Entladungslampe erfasst.

Darüber hinaus kann vorgesehen sein, dass die elektronische Steuerungsschaltung über eine mit dem Zündkreis verbundene Versorgungsspannungs-Erfassungsschaltung verfügt, über die die elektronische Steuerungsschaltung den Spannungspegel einer an der wenigstens einen Resonanzkapazität und/oder der wenigstens einen Resonanzinduktivität des Resonanzkreises anliegenden Wechselspannung erfasst, um die Versorgungsspannungspegel der Zünderkennungsschaltung im Falle einer Spannungsunterversorgung in einen definierten Ausgangszustand zurückzusetzen.

Ein aus den Teilwiderständen auf der Gleichstrom führenden Ausgangsseite des Gleichrichters gebildete Widerstandsschaltung (bspw. Spannungsteiler) kann dazu dienen, den Spannungspegel einer Rücksetzspannung einzustellen, die bei Erfassung einer Spannungsunterversorgung der Zünderkennungsschaltung zum Rücksetzen ihres Versorgungsspannungspegels in den definierten Ausgangszustand verwendet wird. Die Zünderkennungsschaltung weist dabei erfindungsgemäß einen Steuerausgang auf, über den sie im Falle einer Spannungsunterversorgung einen in Serie zu dem Spannungsteiler geschalteten steuerbaren Leistungsschalter auf Sperrbetrieb schaltet, um den Versorgungsspannungspegel der Zünderkennungsschaltung in den definierten Ausgangszustand zurückzusetzen.

Die vorliegende Erfindung bezieht sich ferner auf ein Betriebsgerät zum Betrieb von Hochdruck-Entladungslampen, welches ein Überlagerungszündgerät mit einem der vorgenannten erfindungsgemäßen Merkmale aufweist.

### KURZBESCHREIBUNG DER ZEICHNUNGEN

Weitere Eigenschaften, Vorteile und Zweckmäßigkeiten der vorliegenden Erfindung werden nunmehr, Bezug nehmend auf die beigefügten Zeichnungen, anhand einer detaillierten Beschreibung der Ausführungsbeispiele vorliegender Erfindung erläutert. Es zeigt
- Fig. 1a: ein bekanntes Betriebsgerät mit einer zum Zünden einer wechselstrombetriebenen Hochdruck-Entladungslampe geeigneten Überlagerungszündschaltung mit Abschaltautomatik,
- Fig. 1b: ein weiteres Ausführungsbeispiel des in Fig. 1a skizzierten Betriebsgeräts,
- Fig. 2a: eine Schaltskizze einer zum Abschalten des Zündbetriebs dienenden Steuerungsschaltung nach dem Stand der Technik, und
- Fig. 2b: eine Schaltskizze einer zum Abschalten des Zündbetriebs dienenden Steuerungsschaltung gemäß vorliegender Erfindung.

### DETAILLIERTE BESCHREIBUNG DER ERFINDUNG

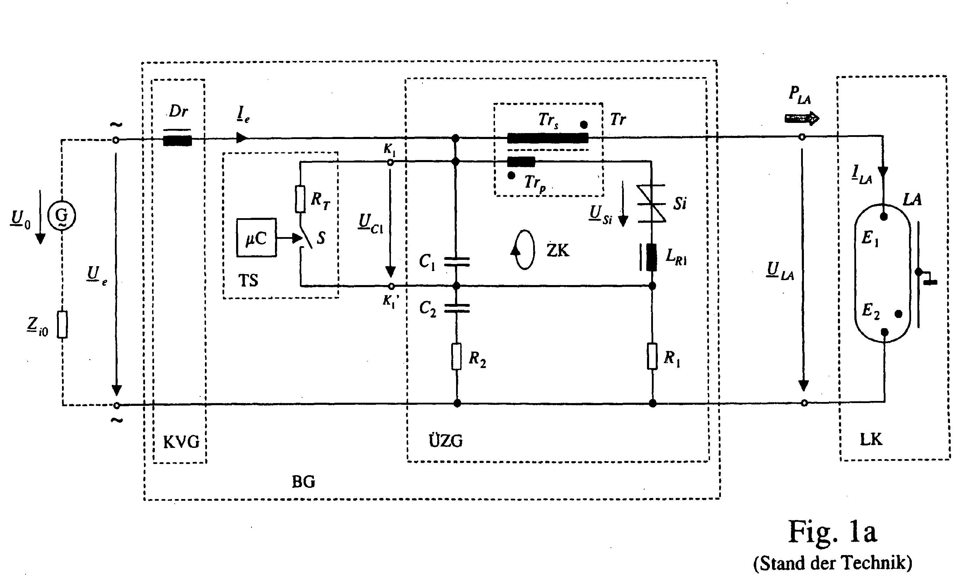

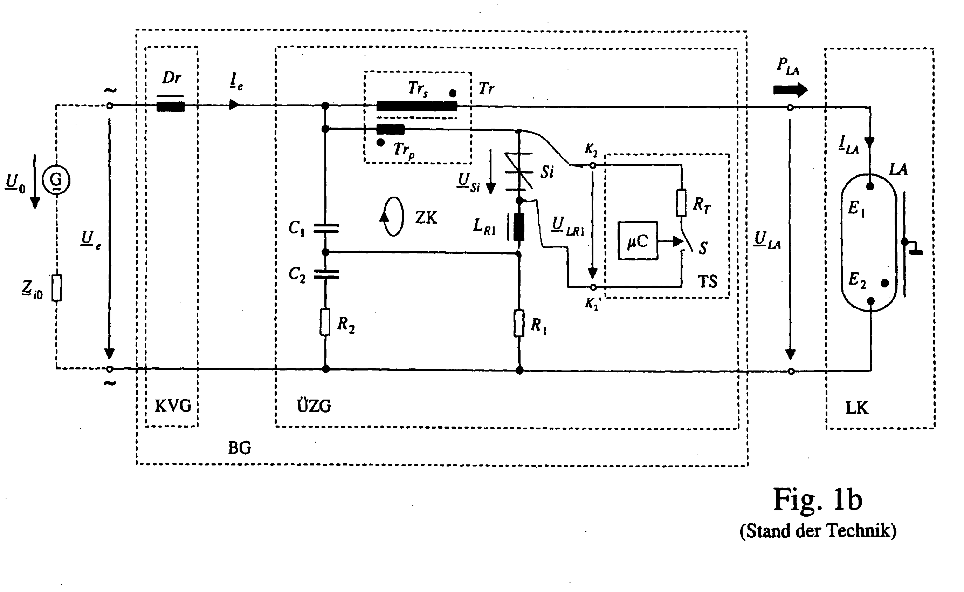

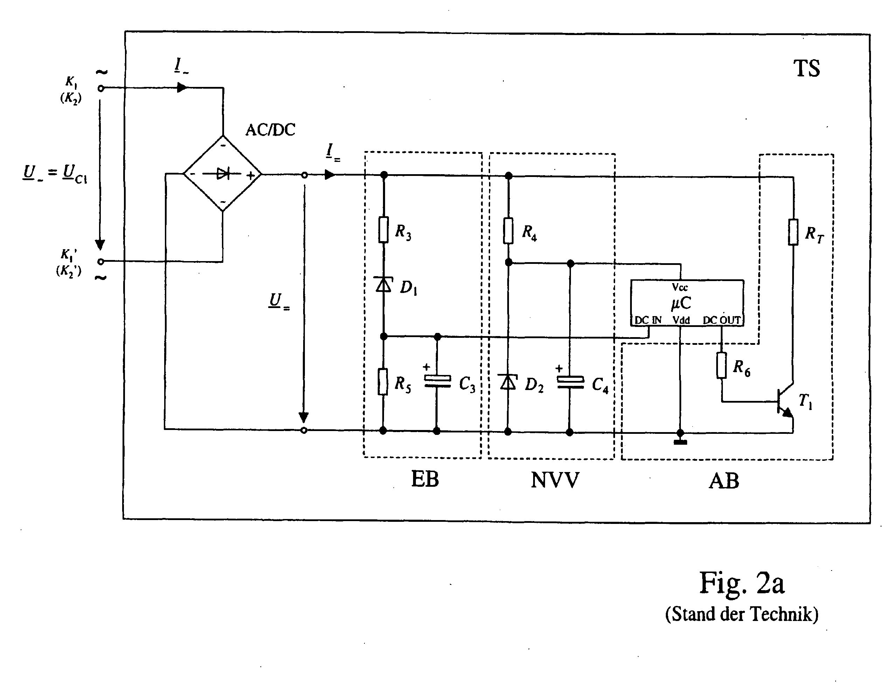

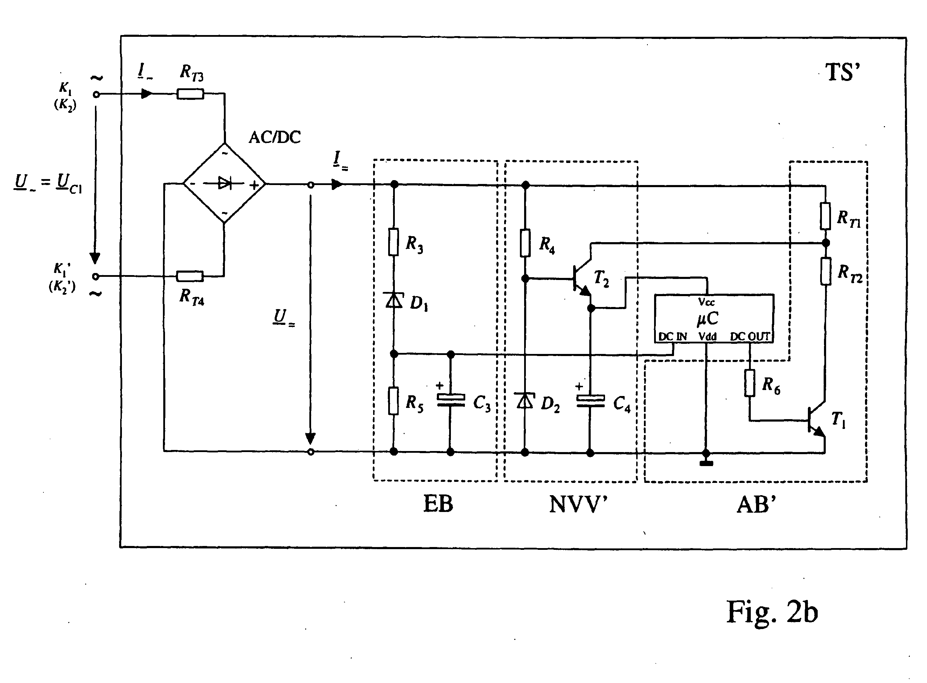

Im Folgenden werden die Ausführungsbeispiele der vorliegenden Erfindung, ausgehend von dem in Fig. 1a, 1b und 2a dargestellten Stand der Technik, unter Bezugnahme auf Fig. 2b im Detail beschrieben.

Fig. 1a zeigt eine zum Zünden einer wechselstrombetriebenen Hochdruck-Entladungslampe LA geeignete Zündschaltung ÜZG eines Betriebsgeräts BG, welche nach dem bekannten Prinzip der Überlagerungszündung arbeitet.

Die Überlagerungszündschaltung ÜZG weist dabei einen Impulstransformator Tr auf, dessen Sekundärwicklung Trₛ in eine Wechselspannung führende Versorgungsleitung zwischen die Lampe LA und ein Vorschaltgerät KVG geschaltet ist.

Der Serienschaltung aus der Sekundärwicklung Trₛ des Impulstransformators Tr und der Lampe LA ist ein als Hochfrequenzrückschlusselement wirkender, aus einer Serienschaltung eines Stoßkondensators *C*₁ und eines Zündhilfskondensators *C*₂ gebildeter Spannungsteiler mit einem (optionalen) Vorwiderstand *R*₂ parallel geschaltet. Dem Stoßkondensator *C*₁ ist wiederum eine Serienschaltung aus der Primärwicklung Trₚ des Impulstransformators Tr, einem vorzugsweise symmetrisch schaltenden Halbleiter-Leistungsschalter und einer dem Halbleiter-Leistungsschalter vorgeschalteten, als Hochfrequenzdrossel wirkenden Induktivität *L*_{*R*1} parallel geschaltet, die zusammen mit der Primärwicklung Trₚ des Impulstransformators Tr mit dem Stoßkondensator *C*₁ einen Parallelresonanzkreis PRK bildet.

Der Serienschaltung aus dem Zündhilfskondensator *C*₂ und dem vorgenannten Ohmschen Widerstand *R*₂ ist ein Ladewiderstand *R*₁ parallel geschaltet, über den der Stoßkondensator *C*₁ aufgeladen wird.

Zum Zünden der Hochdruck-Entladungslampe LA wird der Stoßkondensator *C*₁ über die aus der Serienschaltung des Zündhilfskondensators *C*₂ und dem Ohmschen Widerstand *R*₂ einerseits und dem Ladewiderstand *R*₁ andererseits gebildete Parallelschaltung aufgeladen, bis die am Sidac Si anliegende Spannung *U_{Si}* die Schaltspannung des Halbleiter-Leistungsschalters übersteigt, wodurch das Sidac Si durchbricht und in einen niederohmigen Zustand (Durchschaltbetrieb) übergeht. Mit Durchbrechen des Sidacs Si wird der Stoßkondensator *C*₁ über die Primärwicklung Trₚ des Impulstransformators Tr kurzgeschlossen und entlädt sich dabei über die Primärwicklung Trₚ und die zu der Primärwicklung Trₚ über das Sidac Si in Serie geschaltete Resonanzinduktivität *L*_{*R*1}. Der Spannungsabfall in der Primärwicklung Trₚ des Impulstransformators Tr wird im Verhältnis ü der Windungszahlen von Sekundärwicklung Trₛ und Primärwicklung Trₚ hochtransformiert, so dass ein Zündimpuls mit einer Spitzenspannung von einigen Kilovolt an der Lampe LA hervorgerufen wird.

Noch während das Sidac Si leitend geschaltet ist wird der aus der Drosselspule Dr und dem Zündhilfskondensator *C*₂ bestehende Serienresonanzkreis SRK mit seiner Resonanzfrequenz zum Schwingen angeregt, so dass am Zündhilfskondensator *C*₂ und über der Sekundärwicklung Trₛ des Impulstransformators Tr eine überhöhte Leerlaufspannung entsteht. Nachdem sich der Stoßkondensator *C*₁ entladen hat und die am Sidac anliegende Spannung *U_{Si}* wieder unter dessen Schaltspannung abgesunken ist, geht das Sidac Si in einen hochohmigen Zustand über (Sperrbetrieb) und unterbricht somit die Stromversorgung für den vorgenannten Serienresonanzkreis SRK. Währenddessen wird der Stoßkondensator *C*₁ wieder aufgeladen, so dass das Sidac Si erneut durchgeschaltet wird, wenn die an ihm abfallende Spannung *U_{Si}* wieder den Pegel der Schaltspannung erreicht.

Das Überlagerungszündgerät ÜZG kann dabei so gesteuert werden, dass es sich mit Sicherheit abschaltet, wenn die Lampe LA gezündet hat.

Um den Zündbetrieb abschalten bzw. unterbrechen zu können, ist an ein Klemmenpaar K₁-K₁' des Überlagerungszündgeräts ÜZG eine als Abschaltautomatik fungierende Steuerungsschaltung TS angeschlossen. Mit Hilfe dieser Steuerungsschaltung TS werden für eine vorgebbare, mit dem Einschalten der Lampe LA beginnende Zündbetriebsdauer *T*_{*Z*, *ges*} Zündimpulse an die Hochdruck-Entladungslampe LA angelegt, wobei das Überlagerungszündgerät ÜZG abgeschaltet wird, wenn bspw. die Lampe LA bis zum Ende dieser Zündbetriebsdauer nicht in Betrieb ist, d.h. nicht erfolgreich gezündet werden konnte. Falls die Lampe LA vor Ablauf der Zündbetriebsdauer *T_{Z, ges}* zündet, wird die bis dahin abgelaufene Zünddauer *T_{Z}* abgespeichert. Sollte die Lampe LA wieder erlöschen, beispielsweise infolge einer automatischen Sicherheitsabschaltung oder eines zwischenzeitlichen Spannungsabfalls in der Netzspannung, wird die restliche Zeit bis zu der vorgegebenen Zündbetriebsdauer *T_{Z, ges}* aufgewendet, um für einen erneuten Zündvorgang Zündimpulse an die Hochdruck-Entladungslampe LA anzulegen. Tritt einer dieser Fälle nach Ablauf der Zündbetriebsdauer *T_{Z, ges}* auf, bleibt die Lampe LA dauerhaft abgeschaltet. Mit dem Ausschalten des Überlagerungszündgeräts ÜZG wird die Steuerungsschaltung TS in einen definierten Ausgangszustand zurückgesetzt.

Bei dem in Fig. 1a skizzierten Ausführungsbeispiel der Steuerungsschaltung TS werden die an die Hochdruck-Entladungslampe LA angelegten Zündimpulse von einem Steuerungsmodul *µ*C gezählt, das von der Anzahl dieser Zündimpulse auf die zu einem aktuellen Zeitpunkt des Zündbetriebs bereits abgelaufene Zünddauer *T_{Z}* schließt und nach Ablauf der Zündbetriebsdauer *T_{Z, ges}* ein steuerbares Schaltelement S auf Durchschaltbetrieb schaltet. Dabei wird ein Entladewiderstand *R_{T}* parallel zu dem Stoßkondensator *C*₁ des Überlagerungszündgeräts ÜZG geschaltet, über den der Stoßkondensator *C*₁ zeitgesteuert entladen wird. Hierbei wird von dem Entladewiderstand *R_{T}* eine Verlustleistung von einigen Watt in thermische Energie umgesetzt. Der aus der Parallelschaltung von Entladewiderstand *R_{T}* und Stoßkondensator *C*₁ einerseits und der Parallelschaltung von Ladewiderstand *R*₁ und Zündhilfskondensator *C*₂ mit Vorwiderstand *R*₂ andererseits gebildete Spannungsteiler "verstimmt" den aus der Primärwicklung Trₚ des Impulstransformators Tr und der über das Sidac Si dazu in Serie geschalteten Resonanzinduktivität *L*_{*R*1} gebildeten Zündkreis, indem es den Spannungspegel der am Sidac Si anliegenden Spannung *U_{Si}* so weit senkt, dass die Schaltspannung des Sidacs Si unterschritten wird. Letzteres schaltet daraufhin in einen hochohmigen Zustand (Sperrbetrieb), wodurch das vorgenannte Überlagerungszündgerät ÜZG abgeschaltet werden kann.

Fig. 1b zeigt ein weiteres Ausführungsbeispiel des in Fig. 1a skizzierten Betriebsgeräts BG, bei die Steuerungsschaltung TS an ein Klemmenpaar K₂-K₂' des Überlagerungszündgeräts ÜZG angeschlossen und damit parallel zu der Resonanzinduktivität *L*_{*R*1} im Zündkreis ZK des Überlagerungszündgeräts ÜZG geschaltet ist. Nach Ablauf der vorgenannten Zündbetriebsdauer *T_{Z, ges}* schaltet das Steuerungsmodul *µ*C der Steuerungsschaltung TS das steuerbare Schaltelement S auf Durchschaltbetrieb, wodurch der Entladewiderstands *R_{T}* zu dem Sidac Si parallel geschaltet wird. Auf diese Weise wird sichergestellt, dass sich der Stoßkondensator *C*₁ nicht mehr auf eine Spannung auflädt, durch die das Sidac Si zum Umschalten in einen niederohmigen Zustand veranlasst wird. Dadurch kann das Überlagerungszündgerät ÜZG auch bei diesem Ausführungsbeispiel des Betriebsgeräts BG vorübergehend abgeschaltet werden.

Außerdem kann vorgesehen sein, dass an der einmal gezündeten Lampe LA nicht mehr als eine vorgegebene Anzahl an weiteren Lampenzündungen vorgenommen werden können, wenn die Abschaltautomatik den Zündvorgang der Lampe LA unterbrochen hat. Somit kann auf das Vorhandensein einer gealterten Lampe geschlossen werden, wenn die Lampe LA selbst nach der vorgegebenen Anzahl an Lampenzündungen unbeabsichtigt abschaltet. Sollte die Lampe LA innerhalb der vorgegebenen Zündbetriebsdauer *T_{Z, ges}* nicht wenigstens einmal gezündet haben, so kann daraus geschlossen werden, dass entweder keine Lampe vorhanden oder die angeschlossene Lampe LA defekt ist. Auf diese Weise kann nicht nur der zum Zünden der Lampe benötigte Energieverbrauch verringert werden, sondern zugleich auch auf den Zustand der Lampe LA geschlossen werden, so dass bei vorliegen einer alten oder defekten Lampe schnell reagiert werden kann.

Fig. 2a zeigt eine Schaltskizze einer zweipoligen Steuerungsschaltung TS nach dem Stand der Technik, die zum automatischen Abschalten bzw. Unterbrechen der Spannungsversorgung im Zündbetrieb der Hochdruck-Entladungslampe LA dient und parallel zu dem vorgenannten Stoßkondensator *C*₁ an das Klemmenpaar K₁-K₁' bzw. K₂-K₂' des Überlagerungszündgeräts ÜZG aus Fig. 1a bzw. Fig. 1b angeschlossen wird. Die Steuerungsschaltung TS weist ein digitales Steuerungsmodul *µ*C auf. Das digitale Steuerungsmodul *µ*C wird dabei über eine Gleichrichterbrückenschaltung AC/DC und eine als Niedervoltversorgung NVV des digitalen Steuerungsmoduls *µ*C dienende Serienschaltung aus einem hochohmigen Eingangsvorwiderstand *R*₄ einerseits und eine aus einem Pufferkondensator *C*₄ und einer Zenerdiode *D*₂ gebildete Parallelschaltung andererseits über einen mit "Vcc" bezeichneten Versorgungsspannungsanschluss mit Gleichspannung versorgt. Die Zenerdiode D₂ dient dabei zum Schutz des digitalen Steuerungsmoduls *µ*C vor Überspannungen, die im Zündbetrieb der Lampe LA auftreten.

Über einen mit Gleichspannung versorgten (nicht dargestellten) Funktionsblock des digitalen Steuerungsmoduls *µ*C, der an den mit "Vcc" bezeichneten Versorgungsspannungsanschluss angeschlossen und mit dem Masseanschluss "Vdd" des digitalen Steuerungsmoduls *µ*C verbunden ist, wird das digitale Steuerungsmodul *µ*C bei jedem Abschalten des Überlagerungszündgeräts ÜZG in einen definierten Ausgangszustand zurückgesetzt. Hierbei liegt eine Schwierigkeit darin, dass die Ausgangsspannung der Gleichrichterbrückenschaltung AC/DC unmittelbar nach einer Lampenzündung auf einen Wert von ca. 20 V zusammenbrechen kann, das digitale Steuerungsmodul *µ*C zu diesem Zeitpunkt aber nicht in den Ausgangszustand zurückgesetzt werden darf.

Eine weitere, mit einem als "DC IN" bezeichneten Eingang des digitalen Steuerungsmoduls *µ*C verbundene und mit einem hochohmigen Vorwiderstand R₃ in Serie geschaltete Zenerdiode D₁, über die das digitale Steuerungsmodul *µ*C das Zünden der vom Überlagerungszündgerät ÜZG angesteuerten Lampe LA überwacht, indem es einen bei einem Durchbrechen der Zenerdiode D₁ zu beobachtenden Spannungseinbruch einer an seinem Eingang DC IN anliegenden Gleichspannung erfasst und auswertet, bildet dabei zusammen mit einem aus einer Serienschaltung zweier Teilerwiderstände *R*₃ und *R*₅ gebildeten, mit einem ausgangsseitigen Pufferkondensator *C*₃ beschalteten Spannungsteiler eine Eingangsbeschaltung EB, die zur Bereitstellung einer Niedervolt-Eingangsspannung für den Eingang DC IN des digitalen Steuerungsmoduls *µ*C dient.

Da Hochdruck-Entladungslampen typischerweise eine Brennspannung *U_{LA}* aufweisen, deren Pegel unterhalb eines bestimmten, durch die Durchbruchspannung der Zenerdiode D₁ vorgebbaren Schwellenwerts liegt, kann ein als digitaler Signalwert "logisch Null" interpretierter Spannungspegel am Eingang DC IN des digitalen Steuerungsmoduls *µ*C zur Erfassung eines auf einen erfolgreichen Zündvorgang zurückzuführendes Brennens der Lampe LA gedeutet werden und ein als digitaler Signalwert "logisch Eins" interpretierter Spannungspegel zur Erfassung der Tatsache, dass die Lampe LA bis zum Erfassungszeitpunkt noch nicht gezündet hat.

Über einen als "DC OUT" bezeichneten Ausgang des digitalen Steuerungsmoduls *µ*C wird ein Steuereingang eines mit dem Entladewiderstand *R_{T}* in Serie geschalteten steuerbaren Leistungsschalters angesteuert, der z.B. als Thyristor, elektromechanischer Schalter (Relais), Hochvolt-Feldeffekttransistor oder, wie in Fig. 2a beispielhaft skizziert, als ein in Emitterschaltung betriebener bipolarer Leistungstransistor T₁ realisiert sein kann, wobei die Emitterschaltung als Ausgangsbeschaltung AB des digitalen Steuerungsmoduls *µ*C dient. Dabei ist der Entladewiderstand *R_{T}* mit dem Kollektor des bipolaren Leistungstransistors T₁ verbunden. Zur Ansteuerung des Bipolartransistors T₁ dient ein am Ausgang DC OUT des Steuerungsmoduls *µ*C bereitgestelltes Steuersignal, das der Basis von T₁ über einen Basiswiderstand *R*₆ zugeführt wird. Hat dieses Steuersignal einen Spannungspegel, der einem digitalen Signalwert von "logisch Eins" entspricht, was dann der Fall ist, wenn entweder die vorgegebene Anzahl an Zündungen bzw. die vorgegebene Zündbetriebsdauer überschritten worden ist oder das Überlagerungszündgerät ÜZG sich im Stand by-Betrieb befindet, wird T₁ auf Durchschaltbetrieb geschaltet. Im Durchschaltbetrieb ist der Entladewiderstand *R_{T}* parallel zum Stoßkondensator *C*₁ des in Fig. 1a skizzierten Überlagerungszündgeräts ÜZG geschaltet. Dadurch wird der Pegel der am Sidac Si anliegenden Spannung *U_{Si}* so weit herabgesetzt, dass die Schaltspannung des Sidacs Si unterschritten und der Zündbetrieb unterbrochen bzw. abgeschaltet wird.

In Fig. 2b ist eine Schaltskizze einer zweipoligen Steuerungsschaltung TS' gemäß vorliegender Erfindung dargestellt, die zum automatischen Abschalten bzw. Unterbrechen des Zündbetriebs dient und wie die in Fig. 2a skizzierte Steuerungsschaltung ebenfalls parallel zu dem vorgenannten Stoßkondensator *C*₁ an das Klemmenpaar K₁-K₁' bzw. K₂-K₂' des Überlagerungszündgeräts ÜZG aus Fig. 1a bzw. Fig. 1b angeschlossen wird.

Anders als bei der in Fig. 2a skizzierten Steuerungsschaltung ist der Entladewiderstand *R_{T}* bei der erfindungsgemäßen Steuerungsschaltung TS' jedoch zumindest zum Teil auf der Wechselstrom führenden Eingangsseite der Gleichrichterbrücke AC/DC angeordnet sind. Dabei ist bspw. einer der auf der Wechselstrom führenden Eingangsseite der Gleichrichterbrücke AC/DC angeordneten Teilwiderstände *R*_{*T*3} und *R*_{*T*4} erfindungsgemäß in der Wechselspannung zuführenden Versorgungsleitung und/oder in der zugehörigen Rückleitung angeordnet.

Zusätzlich können auch auf der Gleichstrom führenden Ausgangsseite der Gleichrichterbrücke AC/DC Teilwiderstände *R*_{*T*1} und *R*_{*T*2} angeordnet sein, die einen kollektorseitig mit dem bipolaren Leistungstransistor T₁ verbundenen Spannungsteiler bilden können, über dessen Ausgang die Niedervoltversorgung NVV' eines digitalen Steuerungsmoduls *µ*C, welches die Funktionalität der vorgenannten Zünderkennungsschaltung hat, über ein weiteres, z.B. als Bipolartransistor T₂ realisiertes steuerbares Schaltelement gespeist wird. Die Kollektor-Emitter-Spannung dieses Bipolartransistors T₂ wird dabei durch den Pegel einer Basis-Emitter-Spannung gesteuert, die durch die Differenz der beiden am Pufferkondensator *C*₄ bzw. an der Zenerdiode D₂ anliegenden Spannungen gegeben ist.

Wird der Leistungstransistor T₁ auf Durchschaltbetrieb geschaltet, wodurch der aus der Parallelschaltung von Entladewiderstand *R_{T}* und Stoßkondensator *C*₁ einerseits und der Parallelschaltung von Ladewiderstand *R*₁ und Zündhilfskondensator *C*₂ mit Vorwiderstand *R*₂ andererseits gebildete Spannungsteiler die am Sidac Si anliegende Spannung *U_{Si}* auf einen Spannungspegel unterhalb seiner Schaltspannung senkt, so dass das Überlagerungszündgerät ÜZG abgeschaltet wird, muss die Niedervoltversorgung NVV' bei einer Spannungsunterversorgung des digitalen Steuerungsmoduls *µ*C sämtliche Funktionseinheiten dieses digitalen Steuerungsmoduls *µ*C in einen definierten Ausgangszustand zurücksetzen, falls der Spannungspegel der am Eingang Vcc des digitalen Steuerungsmoduls *µ*C anliegenden Versorgungsspannung einen bestimmten Schwellenwert unterschreitet.

Durch eine geeignete Dimensionierung der beiden Teilwiderstände *R*_{*T*1} und *R*_{*T*2} des vorgenannten Spannungsteilers kann der Spannungspegel einer Rücksetzspannung eingestellt werden, die im Falle einer Spannungsunterversorgung des digitalen Steuerungsmoduls *µ*C, welche von einem nicht dargestellten, in das digitale Steuerungsmodul *µ*C integrierten elektronischen Baustein festgestellt wird, zum Rücksetzen der Versorgungsspannung auf einen definierten Spannungspegel verwendet werden kann. Auf diese Weise kann die Spannungsversorgung des digitalen Steuerungsmoduls *µ*C bei einem Spannungseinbruch seiner Versorgungsspannung über die Ladespannung des Stoßkondensators *C*₁ zumindest vorübergehend sichergestellt werden.

Im Durchschaltbetrieb des Leistungstransistors T₁ wird dabei das auf den Eingang DC IN des digitalen Steuerungsmoduls *µ*C geführte Eingangssignal von einem nicht dargestellten, in das digitale Steuerungsmodul *µ*C integrierten Logikbaustein für die Dauer der Spannungsunterversorgung am Eingang Vcc des digitalen Steuerungsmoduls *µ*C vorübergehend ausgeblendet und steht während dieser Zeitspanne nicht zur Verfügung. Zu diesem Zweck schaltet das digitale Steuerungsmodul *µ*C im Falle einer Spannungsunterversorgung den über den Steuerausgang DC OUT des digitalen Steuerungsmoduls *µ*C steuerbaren Leistungsschalter T₁, welcher in Serie zu dem aus den Teilwiderständen *R*_{*T*1} und *R*_{*T*2} des Ohmschen Widerstands *R_{T}* gebildeten Spannungsteiler aus geschaltet ist, auf Sperrbetrieb, um den Versorgungsspannungspegel des digitalen Steuerungsmoduls *µ*C in den definierten Ausgangszustand zurückzusetzen. Dies ist für die Funktionsfähigkeit des digitalen Steuerungsmoduls *µ*C nicht weiter hinderlich, stellt allerdings einen gewissen Zusatzaufwand für dessen Steuerlogik dar.

Ein Vorteil der erfindungsgemäßen Lösung besteht darin, dass die vorgenannte Rücksetzschwelle, welche bei Steuerungsschaltungen handelsüblicher, mit einer Abschaltautomatik ausgestatteter Überlagerungszündgeräte bei einer effektiven Versorgungsspannung von ca. 15 V liegt, auf einfache und kostengünstige Weise auf einen höheren Wert von bspw. 50 Volt bis 80 Volt eingestellt werden kann. Auf diese Weise wird eine durchgehende und ausreichende Spannungsversorgung des zum Betrieb der Abschaltautomatik erforderlichen Steuerungsmoduls *µ*C gewährleistet, welches zur Unterbrechung der Stromversorgung des erfindungsgemäßen Überlagerungszündgeräts ÜZG benötigt wird.

Durch die thermisch günstige Aufteilung des Entladewiderstands *R_{T}* auf mehrere räumlich verteilte Teilwiderstände *R*_{*T*1} bis *R*_{*T*4}, von denen ein Teil auf der Wechselstrom führenden Eingangsseite der Gleichrichterbrücke AC/DC und ein anderer Teil auf der Gleichstrom führenden Ausgangsseite dieser Gleichrichterbrücke AC/DC angeordnet ist, wird dafür gesorgt, dass die vom Entladewiderstand *R_{T}* erzeugte thermische Energie nicht an einer Stelle der Schaltung konzentriert auftritt, sondern sich räumlich verteilt. Auf diese Weise können Funktionsstörungen, die bei herkömmlichen Überlagerungszündgeräten mit Abschaltautomatik infolge einer durch lokale Wärmeentwicklung hervorgerufenen Überhitzung einzelner elektronischer Bauteile auftreten, vermieden werden. Außerdem spart die vorgenannte Anordnungsweise der Teilwiderstände *R*_{*T*1} bis *R*_{*T*4} Platz auf der Platine des Überlagerungszündgeräts ÜZG, da die auf der Wechselstrom führenden Eingangsseite der Gleichrichterbrücke AC/DC angeordneten Teilwiderstände *R*_{*T*3} und *R*_{*T*4} des üblicherweise viel Platz beanspruchenden Entladewiderstands *R_{T}* nicht mehr auf dieser Platine platziert sein müssen. Dies ist insbesondere interessant für solche Überlagerungszündgeräte, die wie beispielsweise in WO 97/16944 beschrieben mittels Krimptechnik gefertigt werden - einer aus dem Stand der Technik bekannten Steckermontage-Technik zur kraftschlüssigen Verbindung von Kunststoff- und Metallteilen.

Anzumerken ist, dass in dem Ausführungsbeispiel von Figur 2b der Widerstand RT1 optional ist, d.h. sein Widerstandswert kann 0 Ohm betragen.

## Patentansprüche

1. Überlagerungszündgerät für ein Betriebsgeräts (BG) für Gasentladungslampen, aufweisend:
- einen Impulstransformator (Tr), der Zündimpulse von einem primärseitigen Zündkreis (ZK), umfassend einen in einen Resonanzkreis geschalteten Leistungsschalter (Si), in einen mit den Elektroden (Ei, E₂) einer Lampe (LA) verbundenen sekundärseitigen Lastkreis (LK) transformiert, und
- eine Steuerungsschaltung (TS) zur Steuerung des Betriebs des Überlagerungszündgeräts (ÜZG), deren Versorgungsspannung über einen mit der Primärseite des Impulstransformators (Tr) verbundenen Gleichrichter (AC/DC) gewonnen wird,
wobei die Steuerungsschaltung (TS) das Überlagerungszündgerät (ÜZG) selektiv deaktiviert, indem sie zu dem Resonanzkreis einen Nebenschluss-Strompfad aufweisend einen Ohmschen Widerstands (R_{T}) parallelschaltet, **dadurch gekennzeichnet,**
**dass** der Ohmsche Widerstand (R_{T}) aus Teilwiderständen (R_{T1}, R_{T2}, R_{T3}, R_{T4}) besteht, die wenigstens zum Teil auf der Wechselstrom führenden Eingangsseite des Gleichrichters (AC/DC) angeordnet sind.

2. Überlagerungszündgerät nach Anspruch 1,
**dadurch gekennzeichnet, dass**
die Steuerungsschaltung (TS) einen steuerbaren Leistungsschalter (S, T₁) ansteuert, um den Ohmschen Widerstand (R_{T}) parallel zu dem Resonanzkreises zu schalten.

3. Überlagerungszündgerät nach einem der vorhergehenden Ansprüche,
**gekennzeichnet durch**
eine in die Steuerungsschaltung (TS) integrierte ZünderkennungsSchaltung (µC), mit deren Hilfe die Steuerungsschaltung (TS) ein auf einen erfolgreichen Zündvorgang zurückzuführendes Brennen der an das Betriebsgerät (BG) angeschlossenen Hochdruck-Entladungslampe (LA) erfasst und daraufhin das Zündgerät deaktiviert.

4. Überlagerungszündgerät nach Anspruch 3,
**gekennzeichnet durch**
eine mit dem Zündkreis (ZK) verbundene Versorgungsspannungs-Erfassungsschaltung (NVV'), über die die elektronische Steuerungsschaltung (TS) den Spannungspegel einer an der wenigstens einen Resonanzkapazität (C₁) und/oder der wenigstens einen Resonanzinduktivität (L_{R1}) des Resonanzkreises anliegenden Wechselspannung (U_{C1} bzw. U_{LR1}) erfasst, um die Versorgungsspannungspegel der ZünderkennungsSchaltung (µC) im Falle einer Spannungsunterversorgung in einen definierten Ausgangszustand zurückzusetzen.

5. Überlagerungszündgerät nach Anspruch 4,
**gekennzeichnet durch**
eine aus wenigstens einem Widerstand (R_{T2}) auf der Gleichstrom führenden Ausgangsseite des Gleichrichters (AC/DC) gebildete Widerstandsschaltung, über die der Spannungspegel einer Rücksetzspannung einstellbar ist, die bei Erfassung einer Spannungsunterversorgung der ZünderkennungsSchaltung (^C) zum Rücksetzen ihres Versorgungsspannungspegels in einen definierten Ausgangszustand verwendet wird.

6. Betriebsgerät zum Betrieb von Hochdruck-Entladungslam-pen,
aufweisend ein Überlagerungszündgerät (ÜZG) nach einem der vorhergehenden Ansprüche.

## Claims

1. Superimposed-pulse ignitor for an operating device (BG) for gas discharge lamps, having:
- a pulse transformer (Tr) which transforms ignition pulses from a primary-side ignition circuit (ZK), comprising a power switch (Si) connected to a resonant circuit, into a secondary-side load circuit (LK) connected to the electrodes (Ei, E₂) of a lamp (LA),
and
- a control circuit (TS) for controlling the operation of the superimposed-pulse ignitor (ÜZG), the supply voltage of which is obtained by means of a rectifier (AC/DC) connected to the primary side of the pulse transformer (Tr),
the control circuit (TS) selectively deactivates the superimposed-pulse ignitor (ÜZG) by connecting a shunt current path having an ohmic resistor (R_{T}) in parallel to the resonant circuit, **characterized in that**
the ohmic resistor (R_{T}) consists of resistor elements (R_{T1}, R_{T2}, R_{T3}, R_{T4}) which are at least partially arranged on the input side of the rectifier (AC/DC) carrying alternating current.

2. Superimposed-pulse ignitor according to Claim 1, **characterized in that**
the control circuit (TS) drives a controllable power switch (S, T₁) in order to connect the ohmic resistor (R_{T}) in parallel with the resonant circuit.

3. Superimposed-pulse ignitor according to one of the preceding claims,
**characterized by**
an ignition detection circuit (µC) which is integrated in the control circuit (TS) and with the aid of which the control circuit (TS) detects conduction of the high-pressure discharge lamp (LA) connected to the operating device (BG), which conduction can be attributed to a successful ignition process, and then deactivates the ignitor.

4. Superimposed-pulse ignitor according to Claim 3, **characterized by**
a supply voltage detection circuit (NVV') which is connected to the ignition circuit (ZK) and is used by the electronic control circuit (TS) to detect the voltage level of an alternating voltage (U_{C1} and/or U_{LR1}) applied to the at least one resonant capacitance (C₁) and/or at the at least one resonant inductance (L_{R1}) of the resonant circuit in order to reset the supply voltage level of the ignition detection circuit (µC) to a defined initial state in the event of a voltage undersupply.

5. Superimposed-pulse ignitor according to Claim 4, **characterized by**
a resistance circuit which is formed from at least one resistor (R_{T2}) on the output side of the rectifier (AC/DC) carrying direct current and can be used to set the voltage level of a reset voltage which, if a voltage undersupply of the ignition detection circuit (µC) is detected, is used to reset the supply voltage level of the latter to a defined initial state.

6. Operating device for operating high-pressure discharge lamps,
having a superimposed-pulse ignitor (ÜZG) according to one of the preceding claims.

## Revendications

1. Appareil d'allumage hétérodyne pour un appareil d'actionnement (BG) pour lampes à décharge gazeuse, présentant :
- un transformateur d'impulsions (Tr) qui transforme les impulsions d'allumage d'un circuit d'allumage (ZK) côté primaire, comprenant un commutateur de puissance (Si) branché dans un circuit résonant, en un circuit de charge (LK) côté secondaire relié aux électrodes (Ei, E₂) d'une lampe (LA), et
- un circuit de commande (TS) destiné à commander le fonctionnement de l'appareil d'allumage hétérodyne (ÜZG), dont la tension d'alimentation est obtenue par le biais d'un redresseur (AC/DC) relié au côté primaire du transformateur d'impulsions (Tr),
le circuit de commande (TS) désactivant l'appareil d'allumage hétérodyne (ÜZG) de manière sélective en branchant en parallèle avec le circuit résonant une branche de courant de dérivation qui présente une résistance ohmique (R_{T}), **caractérisé en ce**
**que** la résistance ohmique (R_{T}) se compose de résistances partielles (R_{T1}, R_{T2}, R_{T3}, R_{T4}) qui sont disposées au moins en partie sur le côté entrée du redresseur (AC/DC) conduisant le courant alternatif.

2. Appareil d'allumage hétérodyne selon la revendication 1, **caractérisé en ce que** le circuit de commande (TS) commande un commutateur de puissance (S, T₁) commandable pour brancher la résistance ohmique (R_{T}) en parallèle avec le circuit résonant.

3. Appareil d'allumage hétérodyne selon l'une des revendications précédentes, **caractérisé par** un circuit de détection d'allumage (µC) intégré dans le circuit de commande (TS), à l'aide duquel le circuit de commande (TS) détecte un allumage de la lampe à décharge haute pression (LA) raccordée à l'appareil d'actionnement (BG) qui peut être attribué à une opération d'allumage qui a réussi et désactive ensuite l'appareil d'allumage.

4. Appareil d'allumage hétérodyne selon la revendication 3, **caractérisé par** un circuit de détection de tension d'alimentation (NVV') relié avec le circuit d'allumage, par le biais duquel le circuit électronique de commande (TS) détecte le niveau de tension d'une tension alternative (U_{C1} ou U_{LR1}) présente aux bornes de l'au moins un condensateur de résonance (C₁) et/ou de l'au moins une inductance de résonance (LR₁) du circuit résonant afin de rétablir le niveau de tension d'alimentation du circuit de détection d'allumage (µC) dans un état initial défini dans le cas d'une sous-alimentation en tension.

5. Appareil d'allumage hétérodyne selon la revendication 4, **caractérisé par** un circuit résistif formé par au moins une résistance (R_{T2}) sur le côté sortie du redresseur (AC/DC) conduisant le courant continu, par le biais duquel le niveau de tension d'une tension de rétablissement peut être réglé, lequel est utilisé en cas de détection d'une sous-alimentation en tension du circuit de détection d'allumage (µC) pour rétablir son niveau de tension d'alimentation dans un état initial défini.

6. Appareil d'actionnement pour faire fonctionner des lampes à décharge haute pression, présentant un appareil d'allumage hétérodyne (ÜZG) selon l'une des revendications précédentes.
